# EUROPEAN PATENT APPLICATION

(11) **EP 4 753 031 A1**
(43) Date of publication of application: **03.06.2026**
(21) Application number: 25218819.8
(22) Date of filing: 26.11.2025
(51) Int. Cl.: H01M 50/103, H01M 50/15, H01M 50/209, H01M 50/342, H01M 50/147, H01M 50/30, H01M 50/593

(54) **ENERGY-STORAGE APPARATUS, ENERGY-STORAGE MODULE, AND ELECTRICITY-CONSUMPTION DEVICE**

(30) Priority: 29.11.2024 CN 202411731509
(71) Applicant: Shenzhen Hithium Energy Storage Technology Co., Ltd., Shenzhen, Guangdong 518000 (CN); Xiamen Hithium Energy Storage Technology Co., Ltd., Xiamen, Fujian 361100 (CN)
(72) Inventor: WANG, Jianing, Shenzhen, 518000 (CN); LIU, Junjun, Shenzhen, 518000 (CN)
(74) Representative: Mewburn Ellis LLP

(57) **Abstract**

An energy-storage apparatus (100), an energy-storage module (1000), and an electricity-consumption device are provided in the disclosure. The energy-storage apparatus (100) includes a housing (110), an electrode assembly (120), and a cover plate (20). The electrode assembly (120) is accommodated in an accommodating cavity (112) of the housing (110). The cover plate (20) is mounted to the housing (110) and seals an opening (111) of the housing (110). The cover plate (20) includes a main body portion (21) and a boss portion (22). The main body portion (21) has a first surface (211) and a second surface (212) opposite to the first surface (211). The boss portion (22) is fixedly connected to the main body portion (21) and protrudes relative to the first surface (211). The boss portion (22) has a first face (221) facing away from the electrode assembly (120) and a second face (222) opposite to the first face (221).

## Description

### TECHNICAL FIELD

The disclosure relates to the field of energy storage technology, and in particular, to an energy-storage apparatus, an energy-storage module, and an electricity-consumption device.

### BACKGROUND

Energy-storage apparatuses such as secondary batteries are widely used as the main power source for electricity-consumption devices due to their recyclable characteristics. As the demand for energy-storage apparatuses gradually increases, requirements for the performance of energy-storage apparatuses in all aspects are also becoming higher. In the case where thermal runaway occurs in an energy-storage apparatus, gas will be generated inside the energy-storage apparatus. At this point, a jelly roll of the energy-storage apparatus tends to move towards an end cover and abut against the end cover under the driving of gas, thereby blocking an exhaust passage between the jelly-roll and the end cover, resulting in poor exhaust of the energy-storage apparatus. Consequently, an explosion-proof valve on the end cover cannot be opened in time for pressure relief, thereby reducing the safety of the energy-storage apparatus.

### SUMMARY

An energy-storage apparatus, an energy-storage module, and an electricity-consuming device are provided in the disclosure, which can ensure smooth exhaust of the energy-storage apparatus and ensure that an explosion-proof valve can be opened in time for pressure relief, improving the safety of the energy-storage apparatus.

In a first aspect, an energy-storage apparatus is provided in the disclosure. The energy-storage apparatus includes a housing, an electrode assembly, and a cover plate. An opening and an accommodating cavity are defined in the housing, the opening is in communication with the accommodating cavity, and the electrode assembly is accommodated in the accommodating cavity. The cover plate is mounted to the housing and seals the opening. The cover plate includes a main body portion and a boss portion. The main body portion has a first surface and a second surface, and the first surface is disposed opposite to the second surface in a thickness direction of the main body portion. The boss portion is fixedly connected to the main body portion and protrudes relative to the first surface. The boss portion has a first face facing away from the electrode assembly and a second face opposite to the first face, and an explosion-proof hole is defined in the boss portion. The explosion-proof hole penetrates through the first face and the second face in a thickness direction of the boss portion. At least one first sub-protrusion protrudes from the second face, and the at least one first sub-protrusion is disposed spaced apart from the explosion-proof hole. In a height direction of the energy-storage apparatus, a surface of each of the at least one first sub-protrusion facing the electrode assembly is located on a side of the second surface facing away from the first surface, and the at least one first sub-protrusion is disposed facing the electrode assembly.

At least one second sub-protrusion protrudes from the surface of the at least one first sub-protrusion facing the electrode assembly respectively, and the at least one second sub-protrusion is disposed facing the electrode assembly in the height direction of the energy-storage apparatus.

The at least one first sub-protrusion is implemented as multiple first sub-protrusions. In a length direction of the cover plate, the multiple first sub-protrusions are disposed on two opposite sides of the explosion-proof hole and are disposed spaced apart from one another.

The at least one second sub-protrusion is implemented as multiple second sub-protrusions, and each of the multiple second sub-protrusions protrudes from a surface of a corresponding one of the multiple first sub-protrusions facing the electrode assembly.

In a thickness direction of the cover plate, a ratio of a distance *d₁* defined between the first face and the surface of each of the at least one first sub-protrusion facing the electrode assembly to a thickness of the cover plate ranges from 2 to 3.

The cover plate is further provided with at least one concave portion. An opening of each of the at least one concave portion is defined on a side of the cover plate facing away from the electrode assembly. In a thickness direction of the cover plate, each of the at least one concave portion is disposed opposite to a corresponding one of the at least one first sub-protrusion and a corresponding one of the at least one second sub-protrusion. In the thickness direction of the cover plate, a distance *d₂* defined between the first face and a recess-bottom-surface of each of the at least one concave portion ranges from 0.1mm to 30mm.

Each of the at least one concave portion includes a first recess and a second recess. An opening of the first recess is defined on the side of the cover plate facing away from the electrode assembly. The first recess is disposed opposite to a corresponding one of the at least one first sub-protrusion in the thickness direction of the cover plate. The first recess has a first recess-bottom-surface, and in the thickness direction of the cover plate, a ratio of a distance *d₃* defined between the first recess-bottom-surface and the first face to a thickness of the cover plate is less than or equal to 2. An opening of the second recess is defined facing the first recess-bottom-surface, and the second recess is in communication with the first recess. The second recess is disposed opposite to a corresponding one of the at least one second sub-protrusion in the thickness direction of the cover plate. The second recess has a second recess-bottom-surface, and the second recess-bottom-surface is the recess-bottom-surface of the concave portion. In the thickness direction of the cover plate, a ratio of a distance *d₄* defined between the second recess-bottom-surface and the first recess-bottom-surface to the thickness of the cover plate is less than or equal to 2.

A liquid-injection hole is further defined in the boss portion. The liquid-injection hole penetrates through the first face and the second face in the thickness direction of the boss portion, and is disposed spaced apart from both the explosion-proof hole and the at least one first sub-protrusion.

The energy-storage apparatus further includes an explosion-proof valve and a lower plastic member. The explosion-proof valve is mounted on the boss portion and connected to the explosion-proof hole. The lower plastic member is mounted on a side of the second surface facing away from the first surface. The lower plastic member is provided with an explosion-proof grid and at least one clearance recess is defined in the lower plastic member, and the explosion-proof grid penetrates through the lower plastic member in a thickness direction of the lower plastic member. The explosion-proof grid is disposed opposite to the explosion-proof hole and is in communication with the explosion-proof hole in the height direction of the energy-storage apparatus. An opening of each of the at least one clearance recess faces the cover plate, the at least one clearance recess is disposed spaced apart from the explosion-proof grid, and the at least one clearance recess provides clearance for the at least one first sub-protrusion and the at least one second sub-protrusion.

The lower plastic member is further provided with a reinforcement rib, and the reinforcement rib is disposed on a side of the explosion-proof grid facing away from the explosion-proof hole.

In a second aspect, an energy-storage module is further provided in the disclosure. The energy-storage module includes a bus bar, a harness isolation plate, and any one of the energy-storage apparatus described above. The bus bar and the harness isolation plate are both located on a side of the energy-storage apparatus in a height direction of the energy-storage apparatus, and the bus bar is electrically connected to the energy-storage apparatus.

An assembly hole penetrating through the main body portion in the thickness direction of the main body portion is further defined in the main body portion. The energy-storage apparatus further includes a terminal post extending through the assembly hole. The harness isolation plate is mounted on a side of the boss portion facing away from the main body portion. A mounting recess is defined in the harness isolation plate, an opening of the mounting recess is defined on a side of the harness isolation plate facing away from the boss portion, and a clearance hole is defined in a recess-bottom-wall of the mounting recess. In a thickness direction of the recess-bottom-wall of the mounting recess, the clearance hole penetrates through the recess-bottom-wall of the mounting recess, and the clearance hole provides clearance for the terminal post. The bus bar is mounted in the mounting recess and electrically connected to the terminal post. The bus bar has two first portions and a second portion. The two first portions are disposed spaced apart from each other in a length direction of the bus bar. The two first portions are electrically connected to the terminal post, the second portion is fixedly connected between the two first portions, and the second portion protrudes relative to a surface of each of the two first portions facing away from the terminal post. In the height direction of the energy-storage module, a surface of the second portion facing away from the terminal post is flush with a surface of the harness isolation plate facing away from the boss portion.

In a third aspect, an electricity-consumption device is further provided in the disclosure. The electricity-consumption device includes any one of the energy-storage apparatus described above. The energy-storage module is configured to supply power to the electricity-consumption device.

In the technical solution provided by the disclosure, the first sub-protrusion and the second sub-protrusion are disposed on the boss portion. In the case where thermal runaway occurs in the energy-storage apparatus, the first sub-protrusion and the second sub-protrusion may abut against the electrode assembly of the energy-storage apparatus, so that a certain gap may be reserved between the electrode assembly and the boss portion, avoiding blockage of the exhaust passage between the electrode assembly and the cover plate, and ensuring smooth exhaust of the energy-storage apparatus. Consequently, the explosion-proof valve on the cover plate may be opened in time for pressure relief, and thus avoiding explosion of the energy-storage apparatus, which in turn helps to improve the safety performance of the energy-storage apparatus. In addition, the explosion-proof valve is mounted in the explosion-proof hole of the boss portion of the cover plate, which may increase the distance defined between the explosion-proof valve and the electrode assembly, thereby preventing exhaust blockage caused by an excessively low position of the explosion-proof valve, and ensuring that all gases inside the energy-storage apparatus can be smoothly discharged. Consequently, safety accidents caused by poor exhaust may be avoided, and the safety performance of the energy-storage apparatus is further improved.

### BRIEF DESCRIPTION OF THE DRAWINGS

In order to more clearly illustrate technical solutions of embodiments of the disclosure, the accompanying drawings required for embodiments of the disclosure will be described in the following.
FIG. 1 is a schematic structural view of an energy-storage module provide in embodiments of the disclosure.
FIG. 2 is a schematic enlarged view of section A illustrated in FIG. 1.
FIG. 3 is a schematic structural view illustrating an energy-storage apparatus and a harness isolation plate illustrated in FIG. 2.
FIG. 4 is a schematic structural view of an energy-storage apparatus in the energy-storage module illustrated in FIG. 1.
FIG. 5 is an exploded schematic structural view of the energy-storage apparatus illustrated in FIG. 4.
FIG. 6 is a schematic cross-sectional structural view of the energy-storage apparatus illustrated in FIG. 4, taken along line B-B.
FIG. 7 is a schematic structural view of an end cover assembly in the energy-storage apparatus illustrated in FIG. 4.
FIG. 8 is an exploded schematic structural view of the end cover assembly illustrated in FIG. 7.
FIG. 9 is a schematic structural view of a lower plastic member in the end cover assembly illustrated in FIG. 8, viewed from another direction.
FIG. 10 is a schematic structural view of a cover plate in the end cover assembly illustrated in FIG. 4.
FIG. 11 is a schematic structural view of the cover plate illustrated in FIG. 10, viewed from another direction.
FIG. 12 is a schematic cross-sectional structural view of the cover plate illustrated in FIG. 10, taken along line C-C.
FIG. 13 is an exploded schematic structural view of a terminal post unit in the end cover assembly illustrated in FIG. 8.
FIG. 14 is a schematic structural view of an upper plastic member in the terminal post unit illustrated in FIG. 13.

The corresponding names for each reference sign in the accompanying drawings are as follows:
energy-storage module 1000, first direction *X,* second direction *Y,* third direction Z, energy-storage apparatus 100, bus bar 200, harness isolation plate 300, collection harness 400, mounting recess 310, assembly recess 320, clearance notch 330, clearance hole 311, first portion 210, second portion 220, housing 110, electrode assembly 120, end cover assembly 130, opening 111, accommodating cavity 112, lower plastic member 10, cover plate 20, explosion-proof valve 30, terminal-post unit 40, third surface 11, fourth surface 12, explosion-proof grid 101, inlet hole 102, through hole 103, clearance recess 104, first sub-recess 1041, second sub-recess 1042, second protrusion 105, third sub-protrusion 1051, fourth sub-protrusion 1052, reinforcement rib 106, main body portion 21, boss portion 22, first surface 211, second surface 212, assembly hole 213, first face 221, second face 222, explosion-proof hole 223, liquid-injection hole 224, concave portion 225, first recess 2251, second recess 2252, first recess-bottom-surface 2251a, second recess-bottom-surface 2252a, first protrusion 226, first sub-protrusion 2261, second sub-protrusion 2262, upper plastic member 41, terminal post 42, sealing member 43, connector 44, plastic main body 411, extending portion 412, fitting recess 413, mounting hole 414, flange portion 421, post portion 422.

### DETAILED DESCRIPTION

The following will clearly and comprehensively illustrate technical solutions of embodiments of the disclosure with reference to the accompanying drawings of embodiments of the disclosure.

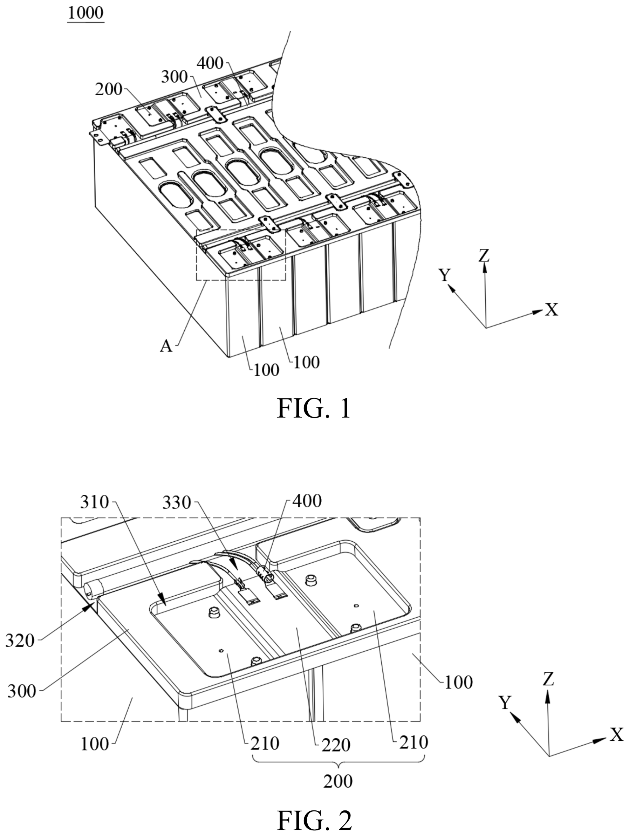

Reference is made to FIG. 1, which is a schematic structural view of an energy-storage module 1000 provide in embodiments of the disclosure. For ease of illustration, a length direction of the energy-storage module 1000 is defined as a first direction X, a width direction of the energy-storage module 1000 is defined as a second direction *Y*, and a height direction of the energy-storage module 1000 is defined as a third direction Z. The first direction *X,* the second direction *Y,* and the third direction Z are mutually perpendicular to each other.

In the embodiment, the energy-storage module 1000 includes multiple energy-storage apparatuses 100, multiple bus bars 200, a harness isolation plate 300, and a collection harness 400. Specifically, the multiple bus bars 200 and the harness isolation plate 300 are mounted on the multiple energy-storage apparatuses 100. The multiple bus bars 200 are electrically connected to the multiple energy-storage apparatuses 100. The collection harness 400 is mounted on the harness isolation plate 300 and is electrically connected to the multiple bus bars 200. The collection harness 400 may be configured to collect parameters such as voltage and temperature of the energy-storage apparatuses 100.

Specifically, in the first direction X, the multiple energy-storage apparatuses 100 are arranged sequentially. In the embodiment, the multiple energy-storage apparatuses 100 may be connected in series, or the multiple energy-storage apparatuses 100 may be connected in parallel, or some energy-storage apparatuses 100 may be connected in series and some energy-storage apparatuses 100 may be connected in parallel. The manner in which the multiple energy-storage apparatuses 100 in the energy-storage module 1000 are connected are not specifically limited in embodiments of the disclosure. In addition, each energy-storage apparatus 100 may have a capacity ranging from 500Ah to 3000Ah. Each energy-storage apparatus 100 may have a width ranging from 50mm to 150mm, may have a height ranging from 150mm to 400mm, and may have a length ranging from 300mm to 1200mm.

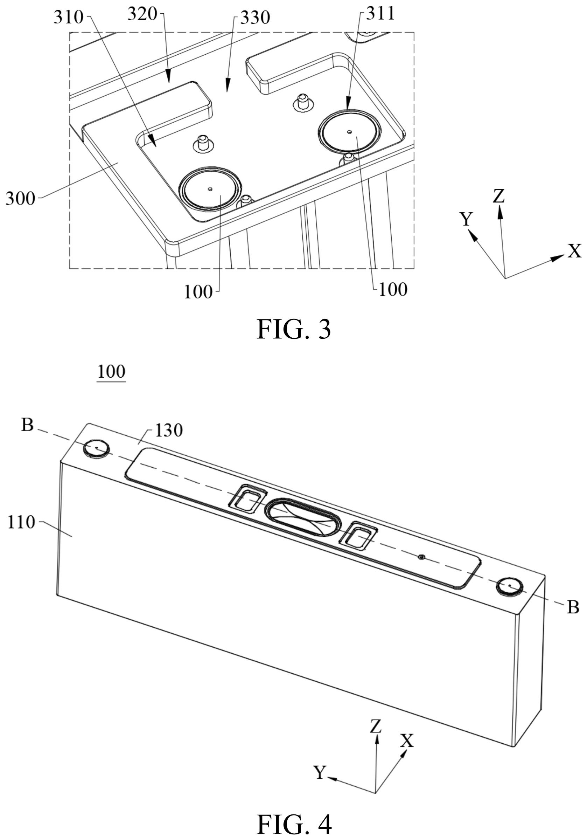

Reference is made to FIG. 2 and FIG. 3. FIG. 2 is a schematic enlarged view of section A illustrated in FIG. 1, and FIG. 3 is a schematic structural view illustrating the energy-storage apparatus 100 and the harness isolation plate 300 illustrated in FIG. 2.

In the embodiment, the harness isolation plate 300 and the multiple bus bars 200 are located on the same side of the multiple energy-storage apparatuses 100 in the height direction of the multiple energy-storage apparatuses 100 (the third direction Z in the figures). The energy-storage apparatus 100 is partially exposed from the harness isolation plate 300, so as to facilitate electrical connection between the energy-storage apparatus 100 and the bus bar 200. Specifically, a mounting recess 310, an assembly recess 320, and a clearance notch 330 are defined in the harness isolation plate 300. Both the mounting recess 310 and the assembly recess 320 define an opening on a side of the harness isolation plate 300 facing away from the energy-storage apparatus 100. Both the mounting recess 310 and the assembly recess 320 are recessed from a surface of the harness isolation plate 300 facing away from the energy-storage apparatus 100 towards the energy-storage apparatus 100. The mounting recess 310 is configured for mounting of the bus bar 200. A clearance hole 311 is defined in a recess-bottom-wall of the mounting recess 310. The clearance hole 311 penetrates through the recess-bottom-wall of the mounting recess 310 in a thickness direction of the recess-bottom-wall of the mounting recess 310. The clearance hole 311 is configured to provide clearance for a terminal post 42 of the energy-storage apparatus 100, so as to facilitate electrical connection between the energy-storage apparatus 100 and the bus bar 200. The assembly recess 320 is disposed spaced apart from the mounting recess 310. The assembly recess 320 is configured for mounting of the collection harness 400.

The clearance notch 330 is defined between the mounting recess 310 and the assembly recess 320. Specifically, an opening of the clearance notch 330 is located on the surface of the harness isolation plate 300 facing away from the energy-storage apparatus 100. The clearance notch 330 is recessed from the surface of the harness isolation plate 300 facing away from the energy-storage apparatus 100 towards the energy-storage apparatus 100, and penetrates through a recess-side-wall of the mounting recess 310 and a recess-side-wall of the assembly recess 320, so that the collection harness 400 can extend through the clearance notch 330 into the mounting recess 310, and thus establishing electrical connection between the collection harness 400 and the bus bar 200.

In the embodiment, there are multiple mounting recesses 310, multiple assembly recesses 320, and multiple clearance notches 330. In the length direction of the energy-storage module 1000 (the first direction *X* in the figures), the multiple mounting recesses 310 are disposed spaced apart from one another, the multiple assembly recesses 320 are located between the multiple mounting recesses 310, and the multiple assembly recesses 320 are spaced apart from one another in the width direction of the energy-storage module 1000 (the second direction *Y* in the figures). Each clearance notch 330 is located between one mounting recess 310 and one assembly recess 320.

Each bus bar 200 is mounted in a corresponding mounting recess 310 and is electrically connected between two adjacent energy-storage apparatuses 100, such that the multiple energy-storage apparatuses 100 are connected in series or in parallel. In the embodiment, each bus bar 200 includes two first portions 210 and a second portion 220. In a length direction of the bus bar 200, the two first portions 210 are disposed spaced apart from each other. The second portion 220 is fixedly connected between the two first portions 210 and protrudes relative to a surface of each first portion 210 facing away from the energy-storage apparatus 100. Specifically, each first portion 210 is electrically connected to the energy-storage apparatus 100, and the second portion 220 is electrically connected to the collection harness 400, so that the collection harness 400 can collect parameters such as voltage and temperature of the energy-storage apparatus 100.

The collection harness 400 is disposed on a side of the harness isolation plate 300 facing away from the multiple energy-storage apparatuses 100. Specifically, a part of the collection harness 400 is mounted in the assembly recess 320, and a part of the collection harness 400 extends through the clearance notch 330 into the mounting recess 310 to be electrically connected to the bus bar 200. With this arrangement, the collection harness 400 may be separated from the energy-storage apparatus 100 by means of the harness isolation plate 300 that is made of plastic material, thereby preventing contact between the collection harness 400 and the energy-storage apparatus 100, and thus avoiding short circuit. Exemplarily, the collection harness 400 is a harness flexible printed circuit (FPC). It may be noted that, the wiring harness FPC in the energy-storage module 1000 is a printed circuit board (PCB) made of flexible copper-clad laminate as a substrate. In the energy-storage module 1000, the wiring harness FPC is mainly responsible for information acquisition and transmission, and also has an overcurrent protection function, which helps to protect the energy-storage apparatus 100 of the energy-storage module 1000 from abnormal short-circuit.

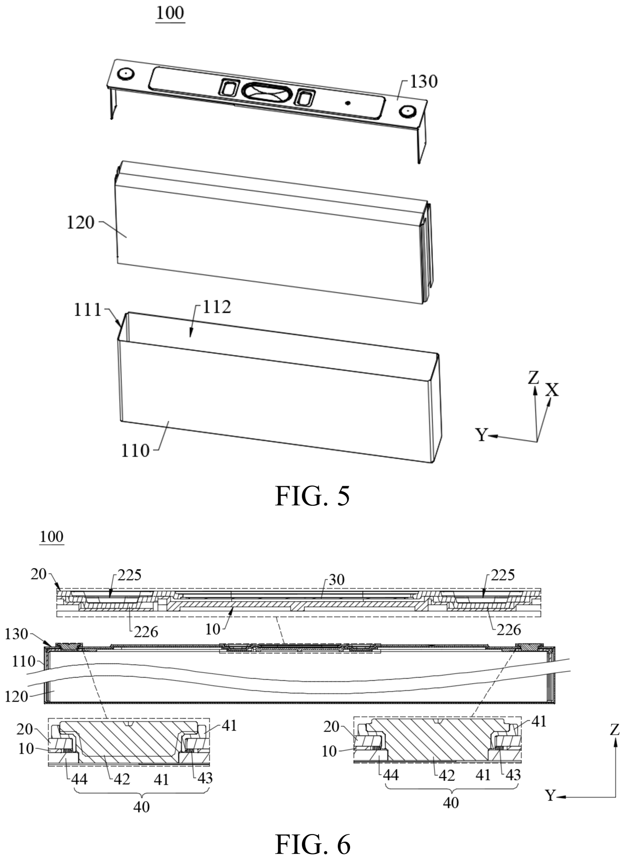

Reference is made to FIG. 4, FIG. 5, and FIG. 6. FIG. 4 is a schematic structural view of the energy-storage apparatus 100 in the energy-storage module 1000 illustrated in FIG. 1, FIG. 5 is an exploded schematic structural view of the energy-storage apparatus 100 illustrated in FIG. 4, and FIG. 6 is a schematic cross-sectional structural view of the energy-storage apparatus 100 illustrated in FIG. 4, taken along line B-B. The phrase "taken along line B-B" refers to that a cross-sectional view is taken along a plane where line B-B is located, and similar illustrations in the following may be understood in the same way.

In the embodiment, the energy-storage apparatus 100 includes a housing 110, an electrode assembly 120, and an end cover assembly 130. An opening 111 and an accommodating cavity 112 are defined in the housing 110, and the opening 111 is in communication with the accommodating cavity 112. The electrode assembly 120 is accommodated in the accommodating cavity 112. The accommodating cavity 112 is further configured to accommodate electrolyte, and the electrode assembly 120 is immersed in the electrolyte. The end cover assembly 130 is mounted on a side of the housing 110 in the height direction of the energy-storage apparatus 100 (the third direction Z in the figures) and seals the opening 111. Exemplarily, the energy-storage apparatus 100 is a prismatic cell. A width direction of the energy-storage apparatus 100 is parallel to the first direction X, a length direction of the energy-storage apparatus 100 is parallel to the second direction *Y*, and a height direction of the energy-storage apparatus 100 is parallel to the third direction Z. In some other embodiments, the energy-storage apparatus 100 may be a cylindrical cell or other types of cell.

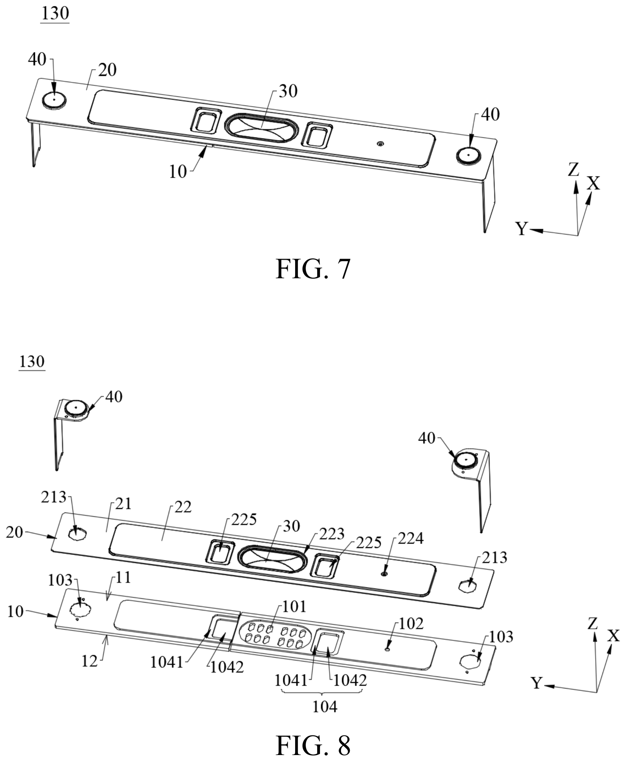

Reference is made to FIG. 6, FIG. 7, and FIG. 8. FIG. 7 is a schematic structural view of the end cover assembly 130 in the energy-storage apparatus 100 illustrated in FIG. 4, and FIG. 8 is an exploded schematic structural view of the end cover assembly 130 illustrated in FIG. 7.

The end cover assembly 130 includes a lower plastic member 10, a cover plate 20, an explosion-proof valve 30, and two terminal-post units 40. The lower plastic member 10 is mounted on a side of the cover plate 20 in a thickness direction of the cover plate 20. The explosion-proof valve 30 and the two terminal-post units 40 are mounted on the cover plate 20. The two terminal-post units 40 are respectively located on two opposite sides of the explosion-proof valve 30 in the length direction of the energy-storage apparatus 100.

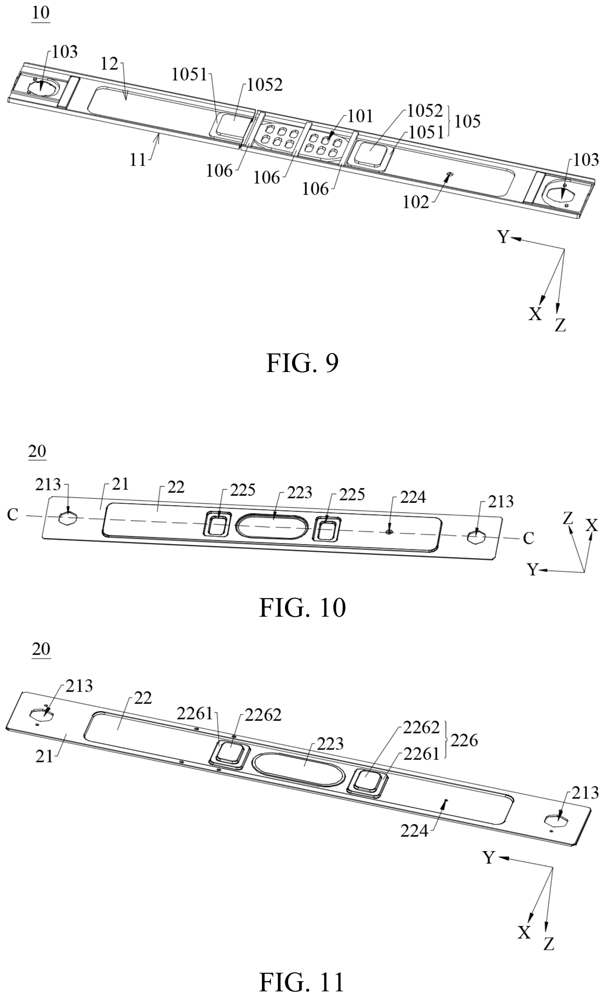

Reference is made to FIG. 8 and FIG. 9. FIG. 9 is a schematic structural view of the lower plastic member 10 in the end cover assembly 130 illustrated in FIG. 8, viewed from another direction.

The lower plastic member 10 has a third surface 11 and a fourth surface 12. The third surface 11 and the fourth surface 12 are disposed opposite to each other in a thickness direction of the lower plastic member 10 (the third direction Z in the figures). The lower plastic member 10 further includes an explosion-proof grid 101. The explosion-proof grid 101 penetrates through the third surface 11 and the fourth surface 12 of the lower plastic member 10. In the embodiment, the explosion-proof grid 101 is located in the middle of the lower plastic member 10.

An inlet hole 102, a through hole 103, and at least one clearance recess 104 are further defined in the lower plastic member 10. The inlet hole 102 and the through hole 103 both penetrate through the third surface 11 and the fourth surface 12 of the lower plastic member 10 in the thickness direction of the lower plastic member 10 (the third direction Z in the figures). The inlet hole 102 and the through hole 103 are disposed spaced apart from each other, and are both disposed spaced apart from the explosion-proof grid 101. Specifically, in the length direction of the energy-storage apparatus 100 (the second direction *Y* in the figures), the inlet hole 102 is located on a side of the explosion-proof grid 101. In the embodiment, in the length direction (shown as the second direction Y) of the energy-storage apparatus 100, the through hole 103 is located on an edge of the lower plastic member 10. Exemplarily, there are two through holes 103. Specifically, one through hole 103 is located on a side of the explosion-proof grid 101 facing away from the inlet hole 102, and the other through hole 103 is located on a side of the inlet hole 102 facing away from the explosion-proof grid 101.

The at least one clearance recess 104 is disposed spaced apart from the explosion-proof grid 101, the inlet hole 102, and the through hole 103. In the embodiment, an opening of each of the at least one clearance recess 104 is defined facing the cover plate 20, and each clearance recess 104 is recessed from the third surface 11 towards the fourth surface 12.

In the embodiment, there are two clearance recesses 104. The two clearance recesses 104 are spaced apart from each other and are respectively disposed on two opposite sides of the explosion-proof grid 101 in a length direction of the lower plastic member 10 (the second direction *Y* in the figures). Specifically, one clearance recess 104 is located between the explosion-proof grid 101 and one through hole 103, and the other clearance recess 104 is located between the explosion-proof grid 101 and the inlet hole 102. In the embodiment, each clearance recess 104 includes a first sub-recess 1041 and a second sub-recess 1042. The second sub-recess 1042 is located on a side of the first sub-recess 1041 and is in communication with the first sub-recess 1041. An opening of the first sub-recess 1041 is located on the third surface 11, and an opening of the second sub-recess 1042 is located on a recess-bottom-surface of the first sub-recess 1041.

In the embodiment, the lower plastic member 10 is further provided with a second protrusion 105. The second protrusion 105 can abut against the electrode assembly 120 to limit the position of the electrode assembly 12. Specifically, the second protrusion 105 is disposed on the fourth surface 12 and protrudes in a direction away from the fourth surface 12 in a thickness direction of the lower plastic member 10. The second protrusion 105 is disposed opposite to the clearance recess 104 in the thickness direction of the lower plastic member 10. That is, in the thickness direction of the lower plastic member 10, a projection of the second protrusion 105 on the lower plastic member 10 is located within the clearance recess 104.

Specifically, the second protrusion 105 includes a third sub-protrusion 1051 and a fourth sub-protrusion 1052 connected to each other. Specifically, the third sub-protrusion 1051 is disposed on the fourth surface 12, and the fourth sub-protrusion 1052 is disposed on a surface of the third sub-protrusion 1051 facing away from the fourth surface 12. A peripheral surface of the third sub-protrusion 1051 protrudes relative to a peripheral surface of the fourth sub-protrusion 1052. In the thickness direction of the lower plastic member 10, the third sub-protrusion 1051 is disposed opposite to the first sub-recess 1041, and the fourth sub-protrusion 1052 is disposed opposite to the second sub-recess 1042. Furthermore, in the embodiment, the second protrusion 105 may be formed by stamping the lower plastic member 10 from the third surface 11 towards the fourth surface 12, with the clearance recess 104 formed on the third surface 11. That is, the third sub-protrusion 1051 of the second protrusion 105 and the first sub-recess 1041 of the clearance recess 104 are formed simultaneously in a single stamping process, and the fourth sub-protrusion 1052 of the second protrusion 105 and the second sub-recess 1042 of the clearance recess 104 are formed simultaneously in a single stamping process, thereby simplifying the manufacturing process of the lower plastic member 10 and reducing the production cost of the lower plastic member 10.

In the embodiment, there may be multiple second protrusions 105, and the multiple second protrusions 105 are disposed spaced apart from one another. Exemplarily, there are two second protrusions 105. The two second protrusions 105 are spaced apart from each other and are respectively disposed on two opposite sides of the explosion-proof grid 101 in the length direction of the lower plastic member 10. Specifically, one second protrusion 105 is disposed on a side of the explosion-proof grid 101 facing away from the inlet hole 102, and the other second protrusion 105 is disposed between the explosion-proof grid 101 and the inlet hole 102. In some other embodiments, the number of the second protrusions 105 may be one, three, or more than three.

Furthermore, in the embodiment, the lower plastic member 10 is further provided with a reinforcement rib 106. The reinforcement rib 106 is disposed on a side of the explosion-proof grid 101 facing away from the cover plate 20. Exemplarily, there are multiple reinforcement ribs 106. The multiple reinforcement ribs 106 are disposed spaced apart from one another in the length direction of the lower plastic member 10. It may be understood that, in the case where thermal runaway occurs in the energy-storage apparatus 100, the lower plastic member 10, under the action of air pressure, bulges significantly at a position provided with the explosion-proof grid 101. By providing the reinforcement rib 106 and disposing the reinforcement rib 106 opposite to the explosion-proof grid 101, the structural strength of the portion of the lower plastic member 10 provided with the explosion-proof grid 101 is increased, and thus a degree of bulging of the lower plastic member 10 at the position provided with the explosion-proof grid 101 is reduced. Consequently, the exhaust passage between the lower plastic member 10 and the cover plate 20 is prevented from being compressed, ensuring that the gas inside the energy-storage apparatus 100 can be smoothly discharged, which prevents explosion of the energy-storage apparatus 100 and thus helping to improve the safety and reliability of the energy-storage apparatus 100.

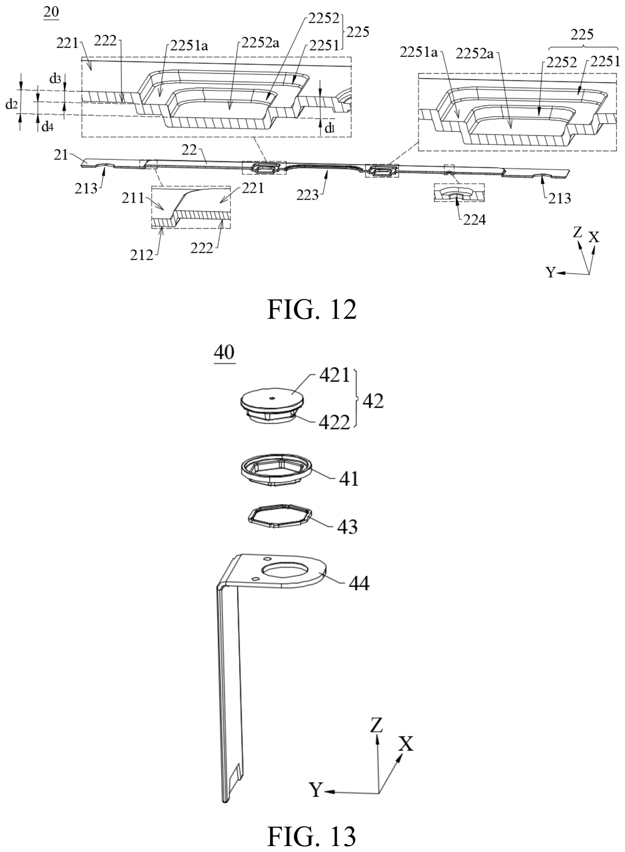

Reference is made to FIG. 10, FIG. 11, and FIG. 12. FIG. 10 is a schematic structural view of the cover plate 20 in the end cover assembly 130 illustrated in FIG. 4, FIG. 11 is a schematic structural view of the cover plate 20 illustrated in FIG. 10, viewed from another direction, and FIG. 12 is a schematic cross-sectional structural view of the cover plate 20 illustrated in FIG. 10, taken along line C-C.

In the embodiment, the cover plate 20 includes a main body portion 21 and a boss portion 22. In the embodiment, the main body portion 21 and the boss portion 22 are integrally formed. Exemplarily, the main body portion 21 and the boss portion 22 may be integrally formed by a stamping process. Specifically, the main body portion 21 has a first surface 211 and a second surface 212. The first surface 211 is disposed opposite to the second surface 212 in a thickness direction of the main body portion 21. The first surface 211 is a surface of the main body portion 21 facing away from the lower plastic member 10, and the second surface 212 is a surface of the main body portion 21 facing the lower plastic member 10. An assembly hole 213 is further defined in the main body portion 21. The assembly hole 213 penetrates through the main body portion 21 in the thickness direction of the main body portion 21. In the embodiment, there are two assembly holes 213. The two assembly holes 213 are disposed spaced apart from each other in a length direction of the cover plate 20. Each assembly hole 213 is in communication with a corresponding through hole 103 of the lower plastic member 10, so as to facilitate the mounting of the terminal-post unit 40.

In the embodiment, the boss portion 22 is located in the center of the cover plate 20. The boss portion 22 is fixedly connected to the main body portion 21 and protrudes relative to the first surface 211. The boss portion 22 further extends in the length direction of the cover plate 20 (the second direction *Y* in the figures). Specifically, the boss portion 22 includes a first face 221 facing away from the electrode assembly 120 and a second face 222 opposite to the first face 221. In the embodiment, both the first face 221 and the second face 222 are located on a side of the first surface 211 facing away from the second surface 212.

The boss portion 22 is provided with at least one concave portion 225, and an explosion-proof hole 223 and a liquid-injection hole 224 are defined in the boss portion 22. The explosion-proof hole 223 and the liquid-injection hole 224 both penetrate through the first face 221 and the second face 222 of the boss portion 22 in a thickness direction of the boss portion 22, and the explosion-proof hole 223 and the liquid-injection hole 224 are disposed spaced apart from each other. In the embodiment, the explosion-proof hole 223 is located in the middle of the boss portion 22. That is, the explosion-proof hole 223 is located between two assembly holes 213. In the embodiment, the explosion-proof hole 223 is disposed opposite to and is in communication with the explosion-proof grid 101 of the lower plastic member 10. The explosion-proof hole 223 may be in communication with the interior of the energy-storage apparatus 100 through the explosion-proof grid 101. The reinforcement rib 106 is disposed on a side of the explosion-proof grid 101 facing away from the explosion-proof hole 223. Furthermore, a region of the boss portion 22 of the cover plate 20 where the explosion-proof hole 223 is located is a stress-weak area, which can achieve a stress-relief effect to avoid excessive stress concentration in the cover plate 20, thereby preventing the cover plate 20 from rupturing due to excessive stress concentration when impacted by the gas inside the energy-storage apparatus 100, and thus helping to ensure good reliability in use of the cover plate 20.

In the length direction of the cover plate 20 (the second direction *Y* in the figures), the liquid-injection hole 224 is located between the explosion-proof hole 223 and one assembly hole 213. The liquid-injection hole 224 is in communication with the inlet hole 102 of the lower plastic member 10. Electrolyte may be injected into the accommodating cavity 112 (as illustrated in FIG. 5) of the housing 110 through the liquid-injection hole 224 of the cover plate 20 and the inlet hole 102 of the lower plastic member 10 sequentially to achieve filling of the electrolyte in the energy-storage apparatus 100. In addition, the liquid-injection hole 224 is defined on the boss portion 22 of the cover plate 20, so that the electrolyte is prevented from directly impacting the electrode assembly 120 during injection of the electrolyte into the accommodating cavity 112 of the housing 110 through the liquid-injection hole 224, thereby preventing active materials on the electrode assembly 120 from being washed off by the electrolyte. In this way, a larger injection space for injection of the electrolyte is provided to facilitate the flow of the electrolyte, thus facilitating complete wetting of the electrode assembly by the electrolyte.

In the embodiment, the at least one concave portion 225 is disposed close to the explosion-proof hole 223, and is disposed spaced apart from both the explosion-proof hole 223 and the liquid-injection hole 224. Specifically, an opening of each concave portion 225 is defined on a side of the cover plate 20 facing away from the electrode assembly 120, and the concave portion 225 is recessed from the first face 221 towards the main body portion 21. In the thickness direction of the cover plate 20, a distance *d₂* defined between the first face 221 and a recess-bottom-surface of the concave portion 225 ranges from 0.1mm to 30mm, such that the cover plate 20 is prevented from rupturing during the formation of the concave portion 225. This ensures that the overall structural strength of the cover plate 20 is relatively high, and thus ensuring good reliability in use of the cover plate 20.

Specifically, the concave portion 225 includes a first recess 2251 and a second recess 2252. The first recess 2251 is in communication with the second recess 2252. Specifically, an opening of the first recess 2251 is defined on the side of the cover plate 20 facing away from the electrode assembly 120, and the first recess 2251 is recessed from the first face 221 towards the main body portion 21. The first recess 2251 has a first recess-bottom-surface 2251a. In the thickness direction of the cover plate 20, a ratio of a distance *d₃* defined between the first recess-bottom-surface 2251a and the first face 221 to a thickness of the cover plate 20 is less than or equal to 2. An opening of the second recess 2252 is defined facing the first recess-bottom-surface 2251a, and the second recess 2252 is recessed from the first recess-bottom-surface 2251a towards a direction away from the first face 221. The second recess 2252 has a second recess-bottom-surface 2252a. In the thickness direction of the cover plate 20, a distance *d₂* defined between the first face 221 and the second recess-bottom-surface 2252a ranges from 0.1mm to 30mm, and a ratio of a distance *d₄* defined between the second recess-bottom-surface 2252a and the first recess-bottom-surface 2251a to the thickness of the cover plate 20 is less than or equal to 2. With this arrangement, the cover plate 20 may be prevented from rupturing during the formation of the first recess 2251 and the second recess 2252, which can ensure that the overall structural strength of the cover plate 20 is relatively high, and thus ensuring good reliability in use of the cover plate 20.

In the embodiment, there are at least two first recesses 2251 and at least two second recesses 2252. In the length direction of the cover plate 20, the at least two first recesses 2251 are respectively disposed on two opposite sides of the explosion-proof hole 223 and are disposed spaced apart from each other. Exemplarily, there are two concave portions 225. Specifically, one first recess 2251 is disposed on a side of the explosion-proof hole 223 facing away from the liquid-injection hole 224, and the other first recess 2251 is disposed between the explosion-proof hole 223 and the liquid-injection hole 224. In some other embodiments, the number of the first recesses 2251 may be one, three, or more than three, which is not limited in embodiments of the disclosure. In the embodiment, the opening of each second recess 2252 is located on the first recess-bottom-surface 2251a of a corresponding first recess 2251. Exemplarily, there are two second recesses 2252. In some other embodiments, the number of the second recesses 2252 may be one, three, or more than three, which is not limited in embodiments of the disclosure.

At least one first protrusion 226 protrudes from the second face 222 of the boss portion 22, and the at least one first protrusion 226 is disposed spaced apart from both the explosion-proof hole 223 and the liquid-injection hole 224. It may be understood that, in the case where the electrode assembly 120 of the energy-storage apparatus 100 expands or the energy-storage apparatus 100 undergoes liquid injection under negative pressure, the recessed first protrusion 226 provided on the boss portion 22 can effectively absorb and disperse the stress generated inside the energy-storage apparatus 100 due to the expansion of the electrode assembly 120 or the liquid injection under negative pressure As a result, local deformation or damage of the cover plate 20 can be significantly reduced, and thus improving the structural stability and service life of the cover plate 20.

Specifically, the at least one first protrusion 226 each includes a first sub-protrusion 2261 and a second sub-protrusion 2262 connected to each other. That is, at least one first sub-protrusion 2261 protrudes from the second face 222 of the cover plate 20, and at least one second sub-protrusion 2262 protrudes from the surface of the at least one first sub-protrusion 2261 facing the electrode assembly 120 respectively. In the embodiment, the at least one first sub-protrusion 2261 and the at least one second sub-protrusion 2262 are disposed spaced apart from both the explosion-proof hole 223 and the liquid-injection hole 224. A peripheral surface of the first sub-protrusion 2261 protrudes relative to a peripheral surface of the second sub-protrusion 2262. The at least one second sub-protrusion 2262 is disposed facing the electrode assembly 120 in the height direction of the energy-storage apparatus 100.

Furthermore, a ratio of a distance *d₁* defined between the first face 221 and the surface of each of the at least one first sub-protrusion 2261 facing the electrode assembly 120 to the thickness of the cover plate 20 ranges from 2 to 3. With this arrangement, a height difference may be formed between the surface of the first sub-protrusion 2261 facing the electrode assembly 120 and the first face 221 of the boss portion 22, and thus providing a space for accumulation of gases inside the energy-storage apparatus 100, allowing gases inside the energy-storage apparatus 100 to gather in the space. In addition, the space is disposed close to the explosion-proof hole 223, which also facilitates the discharge of gas inside the energy-storage apparatus 100 through the explosion-proof hole 223.

In the embodiment, the first sub-protrusion 2261 and the second sub-protrusion 2262 of the first protrusion 226 are disposed opposite to the concave portion 225 in the thickness direction of the cover plate 20. That is, in the thickness direction of the cover plate 20, projections of both the first sub-protrusion 2261 and the second sub-protrusion 2262 of the first protrusion 226 on the boss portion 22 are located within the concave portion 225. Specifically, in the thickness direction of the cover plate 20, the first sub-protrusion 2261 of the first protrusion 226 is disposed opposite to the first recess 2251 of the concave portion 225, and the second sub-protrusion 2262 of the first protrusion 226 is disposed opposite to the second recess 2252 of the concave portion 225. Exemplarily, the first protrusion 226 may be formed by stamping the cover plate 20 from the surface of the boss portion 22 facing away from the main body portion 21 towards the main body portion 21, with the concave portion 225 formed on the surface of the boss portion 22 facing away from the main body portion 21. Specifically, the first sub-protrusion 2261 of the first protrusion 226 and the first recess 2251 of the concave portion 225 are formed simultaneously in a single stamping process, and the second sub-protrusion 2262 of the first protrusion 226 and the second recess 2252 of the concave portion 225 are formed simultaneously in a single stamping process, and thus simplifying the manufacturing process of the cover plate 20 and reducing the production cost of the cover plate 20.

Furthermore, during the formation of the first protrusion 226 on the cover plate 20, the cover plate 20 may be stamped first to form the first recess 2251 and the first sub-protrusion 2261, and then the recess-bottom-wall of the first recess 2251 may be stamped to form the second recess 2252 and the second sub-protrusion 2262. In this way, in the stamping process, excessive stretching of the cover plate 20 due to a large distance defined between the second recess-bottom-surface 2252a of the second recess 2252 and the first face 221 of the boss portion 22 may be avoided, thereby preventing the cover plate 20 from rupturing in the stamping process, which in turn helps to reduce the manufacturing loss of the cover plate 20 and saves the production cost of the cover plate 20.

In the embodiment, there are multiple first sub-protrusions 2261 and multiple second sub-protrusions 2262. In the length direction of the cover plate 20 (the second direction *Y* in the figures), the multiple first sub-protrusions 2261 are disposed on two opposite sides of the explosion-proof hole 223 and are disposed spaced apart from one another. In the thickness direction of the cover plate 20, each first sub-protrusion 2261 is disposed opposite to a corresponding first recess 2251 of the concave portion 225. Exemplarily, there are two first sub-protrusions 2261. Specifically, one first sub-protrusion 2261 is located on a side of the explosion-proof hole 223 facing away from the liquid-injection hole 225, and the other first sub-protrusion 2261 is located between the explosion-proof hole 223 and the liquid-injection hole 224. In some other embodiments, the number of the first sub-protrusions 2261 may be one, three, or more than three, which is not strictly limited in embodiments of the disclosure. In the embodiment, each second sub-protrusion 2262 protrudes from a surface of a corresponding first sub-protrusion 2261 facing the electrode assembly 120. In the thickness direction of the cover plate 20, each second sub-protrusion 2262 is disposed opposite to a corresponding second recess 2252. Exemplarily, there are two second sub-protrusions 2262. In some other embodiments, the number of the second sub-protrusions 2262 may be one, three, or more than three, which is not strictly limited in embodiments of the disclosure.

During assembling the cover plate 20 with the lower plastic member 10, each first protrusion 226 of the cover plate 20 is mounted in a corresponding clearance recess 104 of the lower plastic member 10. Each clearance recess 104 provides clearance for a corresponding first protrusion 226. Specifically, each first sub-protrusion 2261 of the first protrusion 226 is located in a corresponding first sub-recess 1041 of the clearance recess 104 and abuts against the recess-bottom-surface of the first sub-recess 1041. Each second sub-protrusion 2262 of the first protrusion 226 is located in a corresponding second sub-recess 1042 of the clearance recess 104 and abuts against the recess-bottom-surface of the second sub-recess 1042. In this case, the first protrusion 226 of the cover plate 20 and the second protrusion 105 of the lower plastic member 10 together constitute a rib structure. After the end cover assembly 130 is mounted to the housing 110, the first sub-protrusion 2261 and the second sub-protrusion 2262 of the first protrusion 226 of the cover plate 20 are disposed facing the tabs of the electrode assembly 120 inside the housing 110, such that the rib structure jointly formed by the first protrusion 226 of the cover plate 20 and the second protrusion 105 of the lower plastic member 10 can limit the position of the electrode assembly 120, ensuring that the exhaust passage between the electrode assembly 120 and the end cover assembly 130 is not blocked.

Reference is again made to FIG. 7. The explosion-proof valve 30 is mounted on the boss portion 22 and connected to an inner surface of the explosion-proof hole 223. In the embodiment, the explosion-proof valve 30 is fixedly connected to a hole wall of the explosion-proof hole 223. Exemplarily, the explosion-proof valve 30 may be fixedly connected to the hole wall of the explosion-proof hole 223 by welding, such that the explosion-proof valve 30 is mounted in the explosion-proof hole 223. It may be understood that, since the explosion-proof hole 223 is in communication with the interior and the exterior of the energy-storage apparatus 100, the explosion-proof valve 30 will rupture under the action of air pressure when the internal air pressure of the energy-storage apparatus 100 becomes excessively high. This allows the gas inside the energy-storage apparatus 100 to pass through the explosion-proof grid 101 of the lower plastic member 10 and the explosion-proof hole 223 sequentially to be timely discharged to the exterior of the energy-storage apparatus 100, and thus avoiding explosion of the energy-storage apparatus 100 and improving the reliability in use of the energy-storage apparatus 100.

In the embodiment, in the case where thermal runaway occurs in the energy-storage apparatus 100, the electrode assembly 120 may be driven by the airflow to move and bulge towards the end cover assembly 130. In this case, the rib structure jointly formed by the first protrusion 226 of the cover plate 20 and the second protrusion 105 of the lower plastic member 10 may abut against the electrode assembly 120, so that a certain gap may be reserved between the electrode assembly 120 and the boss portion 22 of the cover plate 20, avoiding blockage of the exhaust passage between the electrode assembly 120 and the end cover assembly 130, and ensuring smooth exhaust of the energy-storage apparatus 100. Consequently, the explosion-proof valve 30 may be opened in time for pressure relief, and thus avoiding explosion of the energy-storage apparatus 100, which in turn helps to improve the safety performance of the energy-storage apparatus 100. In addition, the explosion-proof valve 30 is mounted in the explosion-proof hole 223 of the boss portion 22 of the cover plate 20, which may increase the distance defined between the explosion-proof valve 30 and the electrode assembly 120, thereby preventing exhaust blockage caused by an excessively low position of the explosion-proof valve 30, and ensuring that all gases inside the energy-storage apparatus 100 can be smoothly discharged. Consequently, safety accidents caused by poor exhaust may be avoided, and the safety performance of the energy-storage apparatus 100 is further improved.

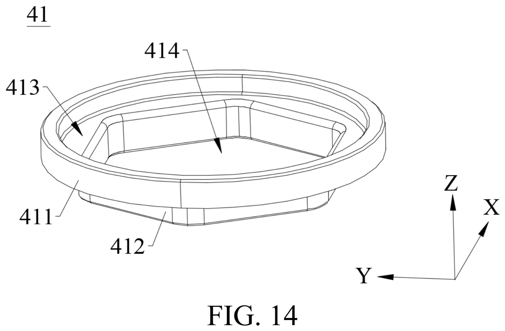

Reference is made to FIG. 6, FIG. 13, and FIG. 14. FIG. 13 is an exploded schematic structural view of a terminal post unit 40 in the end cover assembly 130 illustrated in FIG. 8, and FIG. 14 is a schematic structural view of an upper plastic member 41 in the terminal post unit 40 illustrated in FIG. 13.

In the embodiment, two terminal-post units 40 respectively extend through two assembly holes 213. One terminal-post unit 40 is a positive terminal-post unit and is electrically connected to a positive tab of the electrode assembly 120, and the other terminal-post unit 40 is a negative terminal-post unit and is electrically connected to a negative tab of the electrode assembly 120. In the embodiment, for the two terminal-post units 40, the structure of each component in the terminal-post unit 40, the assembly relationship between components, and the assembly relationship among the components, the lower plastic member 10, and the cover plate 20, are all the same or similar. The following will provide an illustration of the structure of each component, the assembly relationship between components, and the assembly relationship among the components, the lower plastic member 10, and the cover plate 20 in one terminal-post unit 40.

Specifically, each terminal-post unit 40 includes an upper plastic member 41, a terminal post 42, a sealing member 43, and a connector 44. The upper plastic member 41 extends through one assembly hole 213 of the cover plate 20. Specifically, the upper plastic member 41 includes a plastic main body 411 and an extending portion 412. The extending portion 412 is fixedly connected to an end of the plastic main body 411. The plastic main body 411 is mounted on the first surface 211 of the main body portion 21, and the extending portion 412 extends through the assembly hole 213.

A fitting recess 413 and a mounting hole 414 are further defined in upper plastic member 41. Specifically, an opening of the fitting recess 413 is defined on a surface of the plastic main body 411 facing away from the main body portion 21. The fitting recess 413 is recessed from the surface of the plastic main body 411 facing away from the main body portion 21 towards the main body portion 21. The mounting hole 414 penetrates through the upper plastic member 41 in a thickness direction of the upper plastic member 41. Specifically, an opening of the mounting hole 414 is located on a bottom surface of the upper plastic member 41. The mounting hole 414 is recessed from the bottom surface of the upper plastic member 41 towards the fitting recess 413 and penetrates through a recess-bottom-surface of the fitting recess 413 to be in communication with the fitting recess 413. The mounting hole 414 is coaxial with and in communication with the assembly hole 213.

In the embodiment, the terminal post 42 extends through the mounting hole 414 of the upper plastic member 41 and one through hole 103 of the lower plastic member 10. The terminal post 42 includes a flange portion 421 and a post portion 422. The flange portion 421 is fixedly connected to a side of the post portion 422. Specifically, the post portion 422 extends through the mounting hole 414 of the upper plastic member 41, and the flange portion 421 is located in the fitting recess 413 of the upper plastic member 41. The plastic main body 411 of the upper plastic member 41 is located between the flange portion 421 and the main body portion 21 of the cover plate 20, and the extending portion 412 of the upper plastic member 41 is located between a peripheral surface of the post portion 422 and a hole-wall-surface of the assembly hole 213, so as to prevent direct contact between the terminal post 42 and the cover plate 20, and thus avoiding short-circuit in the end cover assembly 130. The terminal post 42 is configured for electrical connection with the bus bar 200, thereby achieving electrical connection between the energy-storage apparatus 100 and the bus bar 200.

The connector 44 is mounted on an inner side of the lower plastic member 10 and sleeved on the post portion 422 of the terminal post 42, and the connector 44 is disposed spaced apart from the cover plate 20. Specifically, one end of the connector 44 is electrically connected to the post portion 422 of the terminal post 42, and the other end of the connector 44 is electrically connected to the tab of the electrode assembly 120. Exemplarily, the connector 44 may be electrically connected to the post portion 422 of the terminal post 42 and/or the tab of the electrode assembly 120 by welding.

The sealing member 43 is located in one through hole 103 of the lower plastic member 10 and sleeved on the extending portion 412 of the upper plastic member 41, and the sealing member 43 is clamped between the cover plate 20 and the connector 44. It may be understood that, the sealing member 43 can ensure the assembly stability between the upper plastic member 41 and the cover plate 20 and between the upper plastic member 41 and the lower plastic member 10. It may be understood that, the sealing member 43 not only ensures the assembly stability between the connector 44 and the cover plate 20 and between the connector 44 and the lower plastic member 10, but also avoids direct conductive contact between the connector 44 and the cover plate 20, achieving insulation between the connector 44 and the cover plate 20.

Reference is again made to FIG. 2 and FIG. 3. After the assembly of the above end cover assembly 130 is completed, the end cover assembly 130 is assembled with structural parts such as the housing 110 and the electrode assembly 120 to obtain the energy-storage apparatus 100. Then, multiple energy-storage apparatuses 100 are arranged in the first direction X. The harness isolation plate 300 is then mounted on a side of the energy-storage apparatus 100 in the height direction of the energy-storage apparatus 100. Specifically, the harness isolation plate 300 is mounted on a side of the boss portion 22 of the cover plate 20 facing away from the main body portion 21. In this case, an opening of the mounting recess 310 of the harness isolation plate 300 is located on a side of the harness isolation plate 300 facing away from the boss portion 22. The clearance hole 311 of the harness isolation plate 300 provides clearance for the terminal post 42 of the energy-storage apparatus 100, so that the terminal post 42 is exposed from the recess-bottom-wall of the mounting recess 310 of the harness isolation plate 300, facilitating subsequent electrical connection between the bus bar 200 and the terminal post 42, thereby achieving electrical connection between the bus bar 200 and the energy-storage apparatus 100. Then, the bus bar 200 is mounted in the mounting recess 310. Specifically, the first portion 210 of the bus bar 200 is electrically connected to the flange portion 421 of the terminal post 42, and the second portion 220 of the bus bar 200 is disposed spaced apart from the recess-bottom-wall of the mounting recess 310. At this point, in the height direction of the energy-storage module 1000, a surface of the second portion 220 facing away from the flange portion 421 of the terminal post 42 is flush with a surface of the harness isolation plate 300 facing away from the boss portion 22 of the cover plate 20.

It may be understood that, by aligning the surface of the second portion 220 of the bus bar 200 facing away from the terminal post 42 to be flush with the surface of the harness isolation plate 300 facing away from the boss portion 22, the flatness of the top surface of the energy-storage module 1000 can be maintained. This prevents the boss portion 22 disposed on the cover plate 20 from impeding the mounting of the harness isolation plate 300 and the wiring harness 400 to the energy storage unit 100, which can ensure the reliability of the connection between the wiring harness 400 and the bus bar 200, and further improve the overall space utilization of the energy storage module 1000.

The disclosure further provides an electricity-consumption device. The electricity-consumption device includes the above energy-storage module 1000. The energy-storage module 1000 is configured to supply power to the electricity-consumption device. The electricity-consumption device may be devices that require electricity, such as new energy vehicle, power storage station, and server.

The foregoing illustrations are merely specific embodiments of the disclosure, but are not intended to limit the protection scope of the disclosure. Any variation or replacement readily figured out by a person skilled in the art within the technical scope disclosed in the disclosure shall fall within the protection scope of the disclosure. Embodiments and features in the embodiments of the disclosure may be mutually combined without conflict. Therefore, the protection scope of the disclosure shall be subject to the protection scope of the claims.

## Claims

1. An energy-storage apparatus (100), comprising:
a housing (110), wherein an accommodating cavity (112) and an opening (111) in communication with the accommodating cavity (112) are defined in the housing (110);
an electrode assembly (120), wherein the electrode assembly (120) is accommodated in the accommodating cavity (112); and
a cover plate (20), wherein the cover plate (20) is mounted to the housing (110) and seals the opening (111), and the cover plate (20) comprises:
a main body portion (21), wherein the main body portion (21) has a first surface (211) and a second surface (212), the first surface (211) is disposed opposite to the second surface (212) in a thickness direction of the main body portion (21); and
a boss portion (22), wherein the boss portion (22) is fixedly connected to the main body portion (21) and protrudes relative to the first surface (211), the boss portion (22) has a first face (221) facing away from the electrode assembly (120) and a second face (222) opposite to the first face (221), an explosion-proof hole (223) is defined in the boss portion (22), the explosion-proof hole (223) penetrates through the first face (221) and the second face (222) in a thickness direction of the boss portion (22), at least one first sub-protrusion (2261) protrudes from the second face (222), the at least one first sub-protrusion (2261) is disposed spaced apart from the explosion-proof hole (223), and in a height direction of the energy-storage apparatus (100), a surface of each of the at least one first sub-protrusion (2261) facing the electrode assembly (120) is located on a side of the second surface (212) facing away from the first surface (211), and the at least one first sub-protrusion (2261) is disposed facing the electrode assembly (120).

2. The energy-storage apparatus (100) of claim 1, wherein at least one second sub-protrusion (2262) protrudes from the surface of the at least one first sub-protrusion (2261) facing the electrode assembly (120) respectively, and the at least one second sub-protrusion (2262) is disposed facing the electrode assembly (120) in the height direction of the energy-storage apparatus (100).

3. The energy-storage apparatus (100) of claim 2, wherein the at least one first sub-protrusion (2261) is implemented as a plurality of first sub-protrusions (2261), and in a length direction of the cover plate (20), the plurality of first sub-protrusions (2261) are disposed on two opposite sides of the explosion-proof hole (223) and are disposed spaced apart from one another.

4. The energy-storage apparatus (100) of claim 3, wherein the at least one second sub-protrusion (2262) is implemented as a plurality of second sub-protrusions (2262), and each of the plurality of second sub-protrusions (2262) protrudes from a surface of a corresponding one of the plurality of first sub-protrusions (2261) facing the electrode assembly (120).

5. The energy-storage apparatus (100) of any one of claims 1 to 4, wherein in a thickness direction of the cover plate (20), a ratio of a distance *d₁* defined between the first face (221) and the surface of each of the at least one first sub-protrusion (2261) facing the electrode assembly (120) to a thickness of the cover plate (20) ranges from 2 to 3.

6. The energy-storage apparatus (100) of claim 2, wherein the cover plate (20) is further provided with at least one concave portion (225), wherein an opening of each of the at least one concave portion (225) is defined on a side of the cover plate (20) facing away from the electrode assembly (120), in a thickness direction of the cover plate (20), each of the at least one concave portion (225) is disposed opposite to a corresponding one of the at least one first sub-protrusion (2261) and a corresponding one of the at least one second sub-protrusion (2262), and in the thickness direction of the cover plate (20), a distance *d₂* defined between the first face (221) and a recess-bottom-surface of each of the at least one concave portion (225) ranges from 0.1mm to 30mm.

7. The energy-storage apparatus (100) of claim 6, wherein each of the at least one concave portion (225) comprises a first recess (2251) and a second recess (2252), wherein
an opening of the first recess (2251) is defined on the side of the cover plate (20) facing away from the electrode assembly (120), the first recess (2251) is disposed opposite to a corresponding one of the at least one first sub-protrusion (2261) in the thickness direction of the cover plate (20), the first recess (2251) has a first recess-bottom-surface (2251a), and in the thickness direction of the cover plate (20), a ratio of a distance *d₃* defined between the first recess-bottom-surface (2251a) and the first face (221) to a thickness of the cover plate (20) is less than or equal to 2; and
an opening of the second recess (2252) is defined on the side of the cover plate (20) facing away from the electrode assembly (120), the second recess (2252) is in communication with the first recess (2251), the second recess (2252) is disposed opposite to a corresponding one of the at least one second sub-protrusion (2262) in the thickness direction of the cover plate (20), the second recess (2252) has a second recess-bottom-surface (2252a), the second recess-bottom-surface (2252a) is the recess-bottom-surface of the concave portion (225), and in the thickness direction of the cover plate (20), a ratio of a distance *d₄* defined between the second recess-bottom-surface (2252a) and the first recess-bottom-surface (2251a) to the thickness of the cover plate (20) is less than or equal to 2.

8. The energy-storage apparatus (100) of any one of claims 1 to 7, wherein a liquid-injection hole (224) is further defined in the boss portion (22), wherein the liquid-injection hole (224) penetrates through the first face (221) and the second face (222) in the thickness direction of the boss portion (22), and is disposed spaced apart from both the explosion-proof hole (223) and the at least one first sub-protrusion (2261).

9. The energy-storage apparatus (100) of claim 2, wherein the energy-storage apparatus (100) further comprises an explosion-proof valve (30) and a lower plastic member (10), wherein the explosion-proof valve (30) is mounted on the boss portion (22) and connected to an inner surface of the explosion-proof hole (223); the lower plastic member (10) is mounted on a side of the second surface (212) facing away from the first surface (211), the lower plastic member (10) is provided with an explosion-proof grid (101) and at least one clearance recess (104) is defined in the lower plastic member (10), the explosion-proof grid (101) penetrates through the lower plastic member (10) in a thickness direction of the lower plastic member (10), the explosion-proof grid (101) is disposed opposite to the explosion-proof hole (223) and is in communication with the explosion-proof hole (223) in the height direction of the energy-storage apparatus (100), an opening of each of the at least one clearance recess (104) faces the cover plate (20), the at least one clearance recess (104) is disposed spaced apart from the explosion-proof grid (101), and the at least one clearance recess (104) provides clearance for the at least one first sub-protrusion (2261) and the at least one second sub-protrusion (2262).

10. The energy-storage apparatus (100) of claim 9, wherein the lower plastic member (10) is further provided with a reinforcement rib (106), and the reinforcement rib (106) is disposed on a side of the explosion-proof grid (101) facing away from the explosion-proof hole (223).

11. The energy-storage apparatus (100) of claim 9 or 10, wherein the lower plastic member (10) has a third surface (11) and a fourth surface (12), the third surface (11) and the fourth surface (12) are disposed opposite to each other in a thickness direction of the lower plastic member (10), the lower plastic member (10) is further provided with a second protrusion (105), the second protrusion (105) is disposed on the fourth surface (12) and protrudes in a direction away from the fourth surface (12) in the thickness direction of the lower plastic member (10).

12. The energy-storage apparatus (100) of claim 11, wherein the second protrusion (105) comprises a third sub-protrusion (1051) and a fourth sub-protrusion (1052) connected to each other, the third sub-protrusion (1051) is disposed on the fourth surface (12), and the fourth sub-protrusion (1052) is disposed on a surface of the third sub-protrusion (1051) facing away from the fourth surface (12).

13. An energy-storage module (1000), comprising a bus bar (200), a harness isolation plate (300), and the energy-storage apparatus (100) of any one of claims 1 to 12, wherein the bus bar (200) and the harness isolation plate (300) are both located on a side of the energy-storage apparatus (100) in a height direction of the energy-storage apparatus (100), and the bus bar (200) is electrically connected to the energy-storage apparatus (100).

14. The energy-storage module (1000) of claim 13, wherein an assembly hole (213) penetrating through the main body portion (21) in the thickness direction of the main body portion (21) is further defined in the main body portion (21);
the energy-storage apparatus (100) further comprises a terminal post (42) extending through the assembly hole (213);
the harness isolation plate (300) is mounted on a side of the boss portion (22) facing away from the main body portion (21), a mounting recess (310) is defined in the harness isolation plate (300), an opening of the mounting recess (310) is defined on a side of the harness isolation plate (300) facing away from the boss portion (22), and a clearance hole (311) is defined in a recess-bottom-wall of the mounting recess (310); and in a thickness direction of the recess-bottom-wall of the mounting recess (310), the clearance hole (311) penetrates through the recess-bottom-wall of the mounting recess (310), and the clearance hole (311) provides clearance for the terminal post (42); and
the bus bar (200) is mounted in the mounting recess (310) and electrically connected to the terminal post (42), the bus bar (200) has two first portions (210) and a second portion (220), the two first portions (210) are disposed spaced apart from each other in a length direction of the bus bar (200), the two first portions (210) are electrically connected to the terminal post (42), the second portion (220) is fixedly connected between the two first portions (210), and the second portion (220) protrudes relative to a surface of each of the two first portions (210) facing away from the terminal post (42), in the height direction of the energy-storage module (1000), a surface of the second portion (220) facing away from the terminal post (42) is flush with a surface of the harness isolation plate (300) facing away from the boss portion (22).

15. An electricity-consumption device, comprising the energy-storage module (1000) of claim 13 or 14, wherein the energy-storage module (1000) is configured to supply power to the electricity-consuming device.
